# EUROPEAN PATENT SPECIFICATION

(11) **EP 3 331 675 B1**
(45) Date of publication and mention of the grant of the patent: **15.04.2020**
(21) Application number: 16767355.7
(22) Date of filing: 03.08.2016
(51) Int. Cl.: B26D 7/10, B26D 7/08, B26D 7/20, H05B 3/84, H05B 3/86, B26D 7/01

(54) **APPARATUS FOR THE TREATMENT, IN PARTICULAR CUTTING, OF A MATERIAL**
VORRICHTUNG ZUR BEARBEITUNG, INSBESONDERE SCHNEIDEN, EINES WERKSTOFFES
DISPOSITIF POUR LE TRAITEMENT, EN PARTICULIER LA DÉCOUPE, D'UN MATERIAU

(30) Priority: 07.08.2015 IT UB201561428 U
(43) Date of publication of application: 13.06.2018
(73) Proprietor: BIERREBI ITALIA S.R.L., 40037 Sasso Marconi (BO) (IT)
(72) Inventor: DE GENNARO, Mauro, 40068 San Lazzaro di Savena (Bologna) (IT); TEDESCHI, Paolo, 40036 Monzuno (Bologna) (IT)
(74) Representative: Casadei, Barbara
(86) International application number: PCT/IB2016/054678
(87) International publication number: WO 2017/025863

(56) References cited:
- WO-A1-01/39941
- CN-U- 2 053 000
- FR-A1- 2 279 687
- US-A- 3 719 113
- US-A- 4 391 168

## Description

### Technical field

The present invention relates to an apparatus for the treatment, in particular cutting, of a material.

The material is preferably in a form of a respective body having a prevalent two-dimensional extension, preferably yielding or foldable, especially conformed in a tape or band-like form, i.e. in a form of a respective piece, and in particular in the form of fabric, leather or like raw materials, and being especially for making corresponding pieces for clothing, that is, for garments, apparel, or for other uses, for the furnishing industry, or for other uses.

### Background art

There are prior art apparatuses for cutting a fabric or the like, especially for making corresponding pieces for clothing, that is, garments, apparel, or the like, the apparatuses having a respective supporting surface, in particular for supporting and sliding the material, and cutting means of the material, in particular situated on the supporting surface.

Konwn solutions are described into documents US4391168 and US3719113.

Document US4391168 relates to an automatically controlled cutting machine in which the cutting tool is a cutting wheel that freely in cutting engagement with sheet material positioned on a hard, smooth and continuous support surface of a cutting table. The sheet material is electrostaticly secured to the support plate. It is the most relevant prior art.

Document US3719113 relates to relates to a penetrable bed used for cutting sheet material that includes a table having a bed of material which provides a supporting surface for a fabric layout consisting of a plurality of fabric sheets arranged in vertically stacked relation.

A cutter having a reciprocating blade is mounted on a working carriage so that it can be driven to and from any predetermined point on the table surface and along any desired line of cut relative to the fabric layup. The fabric layup has been supported on the supporting surface of the bed by principally its own weight and an additional holding influence is done with vacuum means.

In the sector, a need is perceived for having available a treatment apparatus for the specific material, in particular for cutting the material, which enable performance of accurate and precise work operations, and possibly such as to achieve a saving in terms of the labour required.

A further need is perceived in the sector for having available an apparatus, in particular a cutting apparatus, which functions well in any ambient condition, in particular also in low-temperature ambient conditions, or conditions with a high humidity level.

The sector also feels the need for an apparatus for treatment, in particular for cutting a material which has a relatively low construction cost. Moreover, the need is felt in the sector to have available an apparatus which are easy to use for the operators thereof.

Moreover, the need is felt in the sector to have available an apparatus that is sturdy and is not liable to easy breakage or wear.

### Disclosure of the invention

The present invention, defined in claims 1 and 22, therefore proposes a new solution as an alternative to the solutions known up to now and, more specifically, proposes to overcome one or more of the above mentioned drawbacks or problems and/or to meet one or more of the needs felt in the trade or inferable from the above.

An apparatus is therefore provided for treatment of, in particular for cutting, a material, the material preferably being in a form of a respective body having a prevalent two-dimensional extension, preferably yielding or foldable, especially conformed in a tape or band-like form, i.e. in a form of a respective piece, and preferably in the form of fabric, leather or like raw materials, and being especially for making corresponding pieces for clothing, that is, for garments, clothing i.e for apparel, or for other uses, for the furnishing industry or for other uses; the apparatus comprising a respective supporting surface, in particular for resting and possibly sliding the material, especially defined by a corresponding table, preferably flat and preferably having cutting means of the material, in particular situated above the supporting surface and, means designed to generate a field of electrostatic attraction of the material on the supporting surface, characterised in that it comprises means designed to eliminate humidity at the supporting surface of the material.

In this way, it is possible to have available an apparatus, in particular a cutting apparatus, which functions well and effectively in any ambient condition, in particular also in low-temperature ambient conditions, or conditions with a high humidity level.

In fact, in this way any eventual presence of excessive humidity, especially in low ambient temperature conditions, the humidity is deposited on the material or the supporting surface thereof and can compromise the retaining operations of the material on the supporting surface and therefore compromise the quality of the treatment, in particular of the cutting of the material.

The invention further relates to a corresponding and advantageous supporting table of a material.

### Brief description of the drawings

This and other innovative aspects, or specific advantageous features are set out in the appended claims, the technical features and advantages of which will become apparent from the detailed description which follows of preferred advantageous embodiments thereof which however must be considered purely as non-limiting examples on the invention; the description being made with reference to the accompanying drawings, in which:
- Figure 1 is a perspective schematic view of a preferred embodiment of the apparatus according to the present invention;
- Figure 2 is an overall schematic side view of a detail of the preferred embodiment of the apparatus according to the present invention;
- Figure 3 is a lateral view of a first preferred embodiment of the table defining the supporting surface of the material utilisable in the present preferred embodiment of an apparatus according to the present invention;
- Figure 4 is a lateral view of a second preferred embodiment of the table defining the supporting surface of the material utilisable in the present preferred embodiment of an apparatus according to the present invention;
- Figure 5 illustrates a plan view of a glass slab for defining the table according to the present invention, with a particular illustration of the electrical connections for the conductive layer deposited on the slab.

### Detailed description of preferred embodiments of the invention

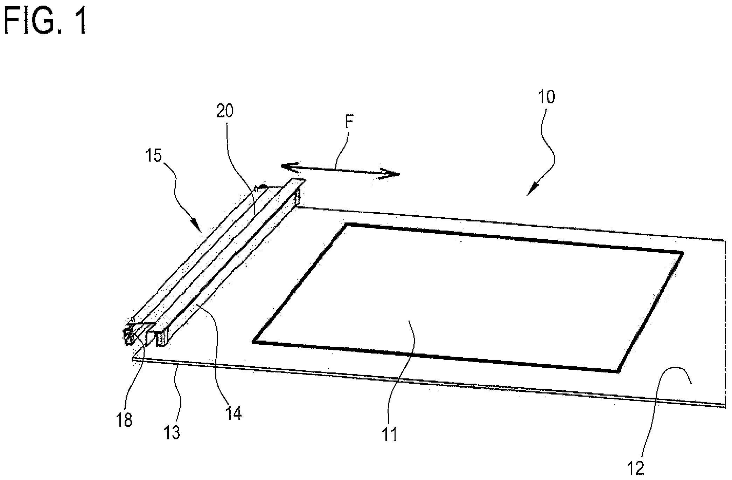

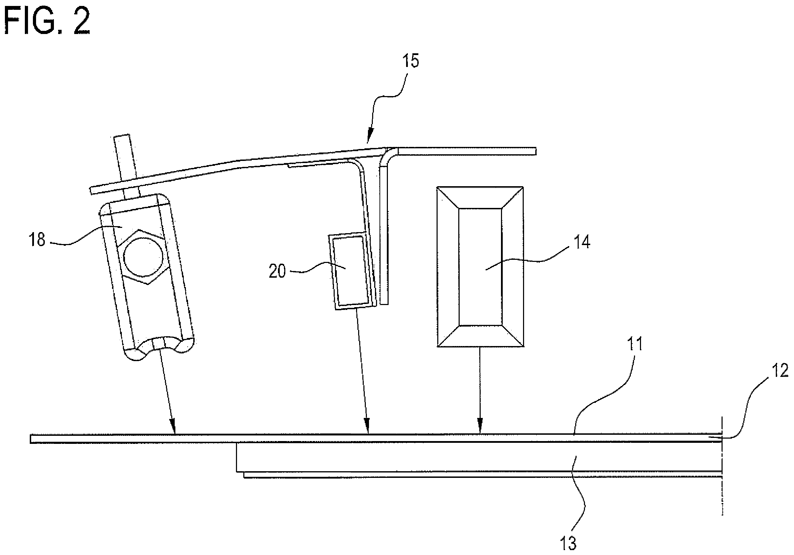

Figures 1 and 2 illustrate a preferred embodiment 10 of an apparatus for treatment of a material 11, in particular for cutting the material 11 into a plurality of pieces, preferably used for making respective items of clothing, for example, garments, apparel, or others beside, or used for realising coverings for furniture, for example for realising a divan, an armchair or others besides.

In particular, however, the material is preferably in a form of a respective body having a prevalent two-dimensional extension, preferably yielding or foldable, especially conformed in a tape or band-like form, or in a form of a respective piece of material.

The material is preferably in a form of a fabric, leather or like raw materials, which is especially for making corresponding pieces for clothing, that is, for garments, apparel, or for other uses, for the furnishing industry, i.e. also for other uses.

The material comprises a respective layer, especially in a tape- or band-like form, i.e. a piece, in particular made of fabric, leather or the like as mentioned in the foregoing, and, possibly, a secondary layer, preferably in the form of a respective sheet, especially made of paper material, in particular of paper, which is in particular designed for tracing lines for defining corresponding shapes, or shaped profiles, especially defining respective pieces of clothing and/or for tracing corresponding alphanumeric writing or the like for identifying the pieces.

The secondary layer of material is positioned above the primary layer, and in particular is intended to be cut together with the primary layer.

In particular, the material to be treated can therefore be made up of a plurality of layers to be treated simultaneously.

As may be inferred from figures 1 and 2, the apparatus comprises a respective supporting surface 12, in particular for resting, the material 11, at a respective treatment zone, in particular for cutting the material, and especially defined by a corresponding table 13, preferably flat.

As illustrated, the supporting surface 11 of the material is preferably in the form of a flat surface 12.

This preferred embodiment of the apparatus 10 also preferably comprises cutting means of the material, provided in particular at the supporting surface 12, i.e. operating or moving with respect to the material resting on the supporting surface 12.

The cutting means are not illustrated in detail in the accompanying figures of the drawings, though it is to be understood that they might be realised in a respective embodiment as disclosed in international patent application WO2010/073269, which is in the name of the present applicant, the contents of which, in the light of the present mention thereof, should be considered as being incorporated in the present description.

Preferably, therefore, the cutting means are in the guise of corresponding circular blade means, in particular which cut the material engaging against the underlying supporting surface 12, the cutting means being supported by a corresponding head, or movable unit, 15, preferably along, or relatively to, the supporting surface 12 and along, or relatively to, the material 11, supported on the surface 12. In practice, the cutting means move transversely to the supporting head, defining therewith corresponding cutting trajectories or simply movement according to respective coordinates which are longitudinal and transversal to the apparatus or supporting surface 12.

The present apparatus comprises means designed to generate a field of electrostatic attraction of the material 11 on the supporting surface 12.

Advantageously, the means designed to generate a field of electrostatic attraction of the material 11 on the supporting surface 12 are in the form of means which can be activated and deactivated, in particular using corresponding electronic control means, preferably comprising computerised means for controlling the apparatus for treatment of or for cutting the material.

Advantageously, the means designed to generate a field of electrostatic attraction of the material 11 on the supporting surface 12 comprise means designed to apply, or to induce, electrical charges on the material 11.

The present apparatus further comprises means designed to eliminate humidity at the supporting surface 12 of the material 11.

In this way, it is possible to have available an apparatus, in particular a cutting apparatus, which functions well and effectively in any ambient condition, in particular also in low-temperature ambient conditions, or conditions with a high humidity level.

In fact, in this way it can be prevented that in any eventual presence of excessive humidity, especially in low ambient temperature conditions, the humidity is deposited on the material or the supporting surface thereof and can compromise the retaining operations of the material on the supporting surface 12 and therefore compromise the quality of the treatment, in particular of the cutting of the material.

The means designed to eliminate humidity are advantageously in a form of corresponding heating means.

In particular, and advantageously, the means designed to eliminate humidity are in a form of corresponding heating means of the engagement surface 12 of the product.

The heating of the surface 12 further enables heating the ambient above it and/or the material to be treated, thus preventing any undesired retaining of the material.

The heating means of the engagement surface 12 of the product heat the table 13, defining the supporting surface 12 of the product.

Advantageously the means designed to eliminate humidity at the supporting surface 12 of the material 11 or the heating means, are internally provided at the table 13 internally defining the supporting surface 12 of the product, in particular between the upper surface 12 and the lower surface of the supporting table 13, as will however emerge more clearly from the following part of the present description.

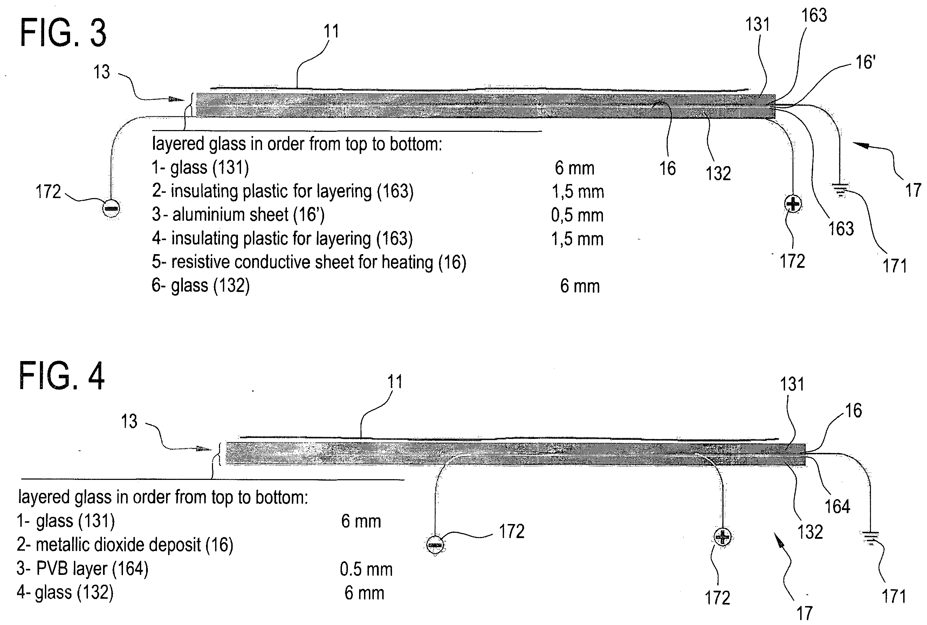

With particular reference to figure 3, which illustrates a first embodiment of the table utilisable in the apparatus according to the present invention, it can be inferred how, advantageously, the means designed to eliminate humidity at the supporting surface 12 of the material 11 or the heating means, comprise an electrically-conductive layer 16.

The respective electrically-conductive layer 16 is advantageously positioned below the supporting surface 12 of the product.

In particular, as illustrated, the respective electrically-conductive layer 16 is positioned at or internally of the table 13 defining the supporting surface 12 of the product.

The electrically-conductive layer is advantageously defined by a metallic layer 16 suitably deposited on the material of the table 13, in particular defined by a layer of metal oxide.

The metallic layer 16 that is deposited can preferably be advantageously obtained starting from a respective paste of metallic oxides, which is appropriately deposited on the material of the table, in particular as will become clearer from the following part of the present description which is deposited on a respective glass slab constituting the table 13, preferably with the layer having a thickness and/or geometry, possibly variable along the table, as a function of the respective operating power which is to be obtained.

The supporting table 13 is advantageously preferably made of glass.

In conformity with this first preferred embodiment of the table defining the supporting surface 13 of the material, a second electrically-conductive layer is advantageously provided, which is defined by a metallic slab 16', in particular made of aluminium, which slab preferably has a respective thickness, in particular about 0.5 mm.

In particular, as illustrated, in this first preferred embodiment of the table of figure 3, the electrically-conductive layer 16 defining the means designed to eliminate humidity at the surface 12 is positioned inferiorly with respect to the second electrically-conductive layer 16' defining the means designed to generate the electrostatic retaining field of the material on the supporting surface.

Advantageously, in a second preferred embodiment of the table illustrated in following figure 4, the electrically-conductive layer 16 for eliminating the humidity, or for heating the supporting surface 12 of the material, further defines the means designed to generate a field of electrostatic attraction of the material 11 on the supporting surface 12. In practice, in this second preferred embodiment the second layer or metallic slab is omitted, which leads to an advantageous structural simplification of the table.

Further advantageously, in both the first and second embodiments of figures 3 and 4, the supporting table 13 is defined by first and second slabs 131, 132, superposed on one another, preferably made of glass, or at least one, preferably the upper one, made of glass, and in particular each having a relative thickness of around 6 mm.

In both the first and second preferred embodiments illustrated in figures 3 and 4, the electrically-conductive layer 16 is advantageously interposed between the first and second slabs 131, 132 defining the supporting table 13.

In particular, as illustrated, the second conductive layer, or metallic slab 16' of the first preferred embodiment of the table is interposed between the first and second slabs 131, 132 defining the supporting table 13.

The electrically-conductive layer 16 is advantageously deposited on the internal face of the respective first and/or second slabs 131, 132 defining the supporting table 13.

In particular, and preferably, in the first preferred embodiment of the table illustrated in figure 3, the first electrically-conductive layer 16 is deposited on the lower slab 132, in particular on the upper surface of the lower slab 132.

Advantageously, in conformity with the first preferred embodiment of the table illustrated in figure 3, a corresponding layer of insulating material and/or plastic material 163, 163, in particular having a thickness of around 1.5 mm, is interposed, or positioned, between the metallic slab 16' and the corresponding surface of the first and second slabs 131, 132 defining the supporting table 13, i.e. on the corresponding first conductive layer 16 deposited on the respective second slab 132.

In practice, in this way a table is obtained that is particularly sturdy and which exerts a considerable electrostatic attraction on the material to be treated and especially which enables obtaining ready heating, suitable for eliminating the humidity of the ambient, and thus enabling the use of the apparatus in any ambient condition.

Advantageously, in conformity with the second preferred embodiment of the table illustrated in figure 4, the single electrically-conductive layer 16 is deposited on the upper slab 131, in particular on the lower surface of the upper slab 131.

Advantageously, in conformity with the second preferred embodiment of the table illustrated in figure 4, a corresponding layer 164 of PVB or polyvinyl butyral, preferably having a thickness of around 0.5 mm, is interposed between the electrically-conductive layer, in particular a metallic deposit 16 deposited on the surface of the corresponding slab 131 of the supporting table 13 and the opposite slab 132 of the supporting table 13.

In this case too, a table is obtained that is particularly sturdy and which exerts a considerable electrostatic attraction on the material to be treated and especially which enables obtaining ready heating, suitable for eliminating the humidity of the ambient, and thus enabling the use of the apparatus in any ambient condition.

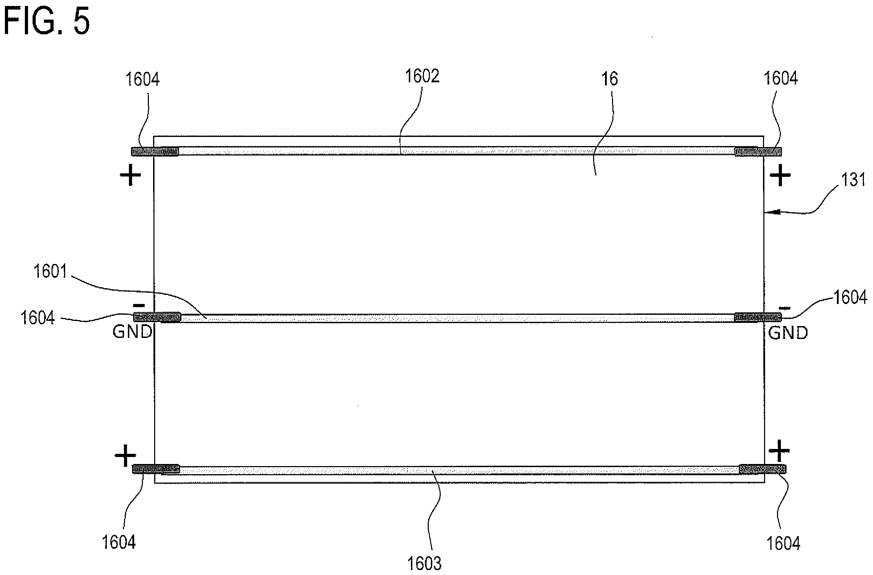

Advantageously, as can be inferred by reference to following figure 5, the conductive metallic layer 16 comprises corresponding electric connecting means, in particular comprising a first and a second, and preferably a third 1601, 1602, 1603 supply bars, especially made of silver paste, screenprinted on the respective slab of the table, having respective terminals 1604, in particular made of copper.

Advantageously, as illustrated, a respective earth connecting bar 1601 is predisposed at a central zone of the respective slab 131 defining the supporting table 13.

A first and a second connecting bar 1602, 1603 to the electricity supply source are advantageously provided at lateral end zones of the respective slab 131 defining the supporting table 13.

In particular, the electrical charges may be in the form of positive or negative electrical charges, and preferably however in the form of negative electrical charges.

Further, as can clearly be inferred from figures 1 and 2, advantageously, the means designed to generate a field of electrostatic attraction of the material on the supporting surface 12 comprise means designed to induce a homogeneous distribution of electrical charges on the material 11.

More specifically, the means designed to induce the electrical charges on the material comprise means 14 for emitting electrical charges or ionizing means.

Further advantageously, the means for emitting electrical charges comprise a respective elongate ionizing bar 14, in particular elongate transversely to the longitudinal direction of extension of the supporting surface 12 and of extension of the material 11 to be treated.

Preferably, the means for emitting electrical charges operate before the material is conveniently treated, in particular before the material 11 is conveniently cut, and in any case, in particular after the same material has been laid out flat on the supporting surface 12.

As may be clearly inferred from figures 1 and 2, the means 14 for emitting electrical charges are positioned at the material 11, in particular when the same material is positioned on the supporting surface 12 of the same material, especially defining the supporting surface of the material on which the cut of the material is to be made.

More specifically, the means 14 for emitting electrostatic, or electrical, charges are positioned above the material 11, and in particular above the supporting surface 12 of the same material 11.

More specifically, the means 14 for emitting electrostatic, or electrical, charges are spaced, more specifically spaced perpendicularly, from the material, and in particular are spaced, preferably perpendicularly spaced, from the supporting surface 12 of the same material 11.

Advantageously, the means 14 for emitting electrical charges extend parallel to the material 11, and in particular parallel to the supporting surface 12 of the material 11.

As illustrated, the material 11 and/or the supporting surface 12 of the same material 11 extend mainly along a longitudinal direction of extension of the apparatus.

Advantageously, the means 14 for emitting electrical charges extend transversely to the material 11 and/or to the supporting surface 12 of the same material 11.

Advantageously, the means 14 for emitting electrical charges and the material 11, and/or the supporting surface 12 of the same material 11, are movable relative to each other.

More specifically, the means 14 for emitting electrical charges are movable, in particular in a parallel fashion, with respect to the material 11 and/or to the supporting surface 12 of the material.

More specifically, the means 14 for emitting electrical charges are movable longitudinally to the material 11 and/or to the supporting surface 12 of the same material 11, as shown by the arrow F in figure 1.

More specifically, the supporting surface 12 of the material 11 is defined by the upper face of a corresponding supporting table 13.

As mentioned, the supporting table 13, that is, the supporting surface 12, is preferably made of dielectric material, and preferably comprises glass, that is, it is made completely or mainly of glass.

Advantageously, the means designed to generate a field of electrostatic attraction of the material 11 on the supporting surface 12 also comprise means 16 designed to induce electrical charges on the surface 12 supporting the material 11.

Advantageously, the means 16 made of electrically conductive material are fixed relative to the supporting surface 12, in particular being integral with the table 13 defining the supporting surface 11.

Advantageously, the means 16 made of conductive material extend parallel to the supporting surface 12 of the material, in particular parallel to the table 13 defining the supporting surface of the material. Advantageously, there are means 17 designed to induce a static distribution of electrical charges in the means 16 made of electrically conductive material.

Advantageously, the means 16 made of electrically conductive material are in connection, via the electric cable, with an earth 171, and with an electricity source 172, in such a way that a weak electrical current can be generated to earth, which is such as to induce a static distribution of electrical charges, in particular positive, on the means made of an electrically conductive material.

This defines a corresponding and economically advantageous preferred embodiment of the means designed to induce a static distribution of electrical charges in the means 16 made of electrically conductive material.

To enable the material once processed, in particular cut, to be easily removed from the supporting surface 12, that is to say, conveniently processed without obstacles for subsequent processing, there are advantageous means 18 designed to neutralise an electrical charge which is present on the material 11, and more specifically, the electrical charge which has been previously induced or applied on the material. Advantageously, the means designed to neutralise the electrical charge of the material 11 are in the form of de-ionizing means, and in particular in the form of a respective de-ionizing bar 18.

In particular, the de-ionizing bar 18 is in the form of a bar transversely elongate to the longitudinal direction of extension of the supporting surface 12 and of extension of the material 11 to be treated.

Advantageously, the means 18 designed to neutralise the electrical charge of the material 11 are positioned at same material 11, in particular when the same material is positioned on the supporting surface 12 of the same material, especially defining the supporting surface of the material on which the cut is made.

Advantageously, the means 18 designed to neutralise the electrical charge of the material 11 operate after the material has been conveniently treated, in particular after the material 11 has been conveniently cut.

More specifically, the means 18 designed to neutralise the electrical charge of the material 11 are positioned above the material 11, in particular above the supporting surface 12 of the same material 11.

As illustrated, the means 18 designed to neutralise the electrostatic, or electric, charge of the material 11 are spaced from the material 11, more specifically perpendicularly spaced from the material 11, and, according to another viewpoint, are spaced, more specifically perpendicularly spaced, from the supporting surface 12 of the same material 11.

Advantageously, the means 18 designed to neutralise the electrical charge of the material 11 extend parallel to the material 11, in particular to the supporting surface 12 of the same material 11.

Further advantageously, the means 18 designed to neutralise the electrical charge of the material 11 extend transversely to the material 11 and/or to the supporting surface 12 of the material 11.

Advantageously, the means 18 designed to neutralise the electrical charge of the material 11 and the material 11, and/or the supporting surface 12 of the same material 11, are movable relative to each other. Advantageously, the means 18 designed to neutralise the electrical charge of the material 11 are movable, in particular in a parallel fashion, with respect to the material 11 and/or to the supporting surface 12 of the same material 11.

Advantageously, the means 18 designed to neutralise the electrical charge of the material 11 are movable longitudinally to the material 11 and/or to the supporting surface 12 of the same material 11.

Advantageously, the means 18 designed to neutralise the electrical charge of the material 11 are movable together, in particular on same movable unit, with the means 14 for emitting the electrical charges, in particular on the material 11.

Advantageously, there are means for activating and deactivating the means 14 for emitting electrical charges.

Advantageously, there are also means for activating and deactivating the means 18 designed to neutralise the electrical charge of the material, more specifically operating in an alternating manner to the status of activating and deactivating the means 14 for emitting electrical charges. Preferably, when the means 18 designed to neutralise the electrical charge of the material 11 and the means 14 for emitting the electrical charges on the material 11 are transported on the same movable unit, the means for activating and deactivating the means 14 for emitting electrical charges activate the emission of the charges during the step for feeding the material 11. During this advancement step, the means 18 for neutralizing the electrical charge are obviously deactivated. Next, upon completion of the cutting operation, the means for neutralizing the charge may be activated, during a corresponding movement of the movable unit relative to the material, with the means 14 for emitting electrical charges, which are, in a non-activated condition.

Advantageously, the apparatus comprises means 20 designed to convey the electrical charges "C" on the material 11.

In practice, advantageously, the present apparatus comprises means 20 designed to convey, or to transport, electrical charges.

Advantageously, the means 20 designed to convey the electrical charges, transport or convey the electrical charges on the material 11.

Preferably and advantageously, the means 20 designed to convey the electrical charges are in the form of means for blowing a corresponding flow of air towards the material 11 and/or towards the supporting surface 12 of the material 11.

In practice, there are means 20 for blowing a flow of air towards the material 11 and/or towards the supporting surface 12 of the material 11, which convey respective electrical charges.

Further advantageously, the means 20 designed to convey the electrical charges 11 are in the form of an elongate blowing bar, or blade 20.

Advantageously, the means 20 designed to convey the electrical charges are at, or close to, the means 14 for emitting electrical charges, in such a way as to appropriately convey the electrical charges which are emitted from these means.

Advantageously, the means 20 designed to convey the electrical charges are at the material 11 positioned on the surface 12 supporting the material 11, in particular when the same material is positioned on the surface 12 supporting the same material, especially defining the supporting surface of the material on which the cut is made.

More specifically, the means 20 designed to convey the electrical charges are above the material, and/or above the supporting surface 12 of the same material.

More specifically, the means 20 designed to convey the electrical charges are spaced from the material 11, more specifically perpendicularly spaced from the material 11, in particular being spaced, more specifically perpendicularly spaced, from the supporting surface 12 of the same material 11.

Advantageously, the means 20 designed to convey the electrical charges extend parallel to the material 11, and/or to the supporting surface 12 of the same material.

More specifically, the means 20 designed to convey the electrical charges extend transversely to the material 11, and/or to the supporting surface 12 of the material 11.

Advantageously, the means 20 designed to convey the electrical charges on the material 11, and/or the supporting surface 12 of the same material 11, are movable relative to each other.

Advantageously, the means 20 designed to neutralise the electrical charges are movable, in particular in a parallel fashion, with respect to the material 11 and/or to the supporting surface 12 of the same material 11. More specifically, the means 20 designed to neutralise the electrical charges are movable longitudinally to the material 11 and/or to the supporting surface 12 of the same material 11.

Advantageously, the means 20 designed to convey the electrical charges are movable together with the means for emitting the electrical charge 14 and/or the means 18 designed to neutralise the electrical charge of the material, being carried in particular on the same movable unit as the means for emitting the electrical charge 14 and/or the means 18 designed to neutralise the electrical charge of the material.

Advantageously, there are means for activating and deactivating the means 20 designed to convey the electrical charges, which operate simultaneously and/or in accordance with the status of activating and deactivating the means 14 for emitting electrical charges. More specifically, when the means for emitting electrical charges are activated or deactivated, the conveying means of the electrical charges 20 are also activated or deactivated.

Advantageously, the cutting means used in this apparatus are movable together with, in particular on the same unit as, one or more of the means 20 designed to convey the electrical charges, the means 18 designed to neutralise the electrical charge of the material, and the means 14 for emitting electrical charges.

In practice, advantageously, one or more of the means 20 designed to convey the electrical charges, the means 18 designed to neutralise the electrical charges of the material, and the means 14 for emitting electrical charges are supported on the same movable cutting head of the material, the head supporting corresponding cutting means of the material, in particular of the rotary blade type. More specifically, when the cutting head comprises a pair of supporting rollers sliding on the product 11 and on the underlying supporting surface 12, the rollers being longitudinally spaced from each other and the cutting means extending between the rollers, and one or more of the means 20 designed to convey the electrical charges, the means 18 designed to neutralise the electrical charge of the material and the means 14 for emitting electrical charges, these can also extend between the supporting rollers sliding on the product and supporting surface 12.

According to a preferred procedure suitable for generating a convenient electrostatic field of attraction, an ionizing device 14 firstly moves above the material situated on the supporting surface 11 of the slab 13, made of insulating material or dielectric material, conveying the electrical charges, in particular negative, emitted by the ionizer 14 on the surface above the same material 11.

This achieves, due to the effect of the connection to earth of the electrically conductive material 16, the attraction of positive electrical charges at the upper surface of the conductor plate 16, with the generation of a corresponding weak electrical current towards the earth point 172. After having treated, that is, cut, the material, the de-ionizing bar 18 may be passed over the material 11 and the material can be conveniently released and suitably processed downstream of the apparatus.

In practice, this provides an apparatus which is particularly effective and of limited cost, which is suitable for generating an advantageous and effective field of electrostatic attraction between the material to be treated, in particular to be cut, and the corresponding supporting surface of the material at the zone in which the material must be treated, that is, cut, and in particular which can operate in any ambient condition, including in the presence of a high level of humidity and/or at a low temperature.

In particular, the positioning of the resistive conductive layer 16 internally of the table 13, between the upper surface 13 and the lower surface of the table, enables obtaining a greater attractive and heating performance to the great advantage of the operating efficiency of the present apparatus and obtains a supporting table which has a structural resistance that is adequate to the specific use and suitable for durably supporting the stresses to which it is subjected.

Advantageously, the table or relative dielectric or insulating supporting surface 12 might be made of any suitable and desired material, in particular a material which is different from glass, for example, it could be made from rubber or felt.

It is also possible that one or more of the means 20 designed to convey the electrical charges, the means for emitting the electrical charge 14 and the means 18 designed to neutralise the electrical charge of the material have an inclination different from the one illustrated in figure 2, that is, they are conveniently tilting.

In the present apparatus, therefore, the heating means 16 are advantageously arranged between the first and second slabs 131, 132, superposed on one another, of the table.

In this way a sturdy table is obtained and at the same time a greater vicinity of the heating means with respect to the upper rest surface of the product and therefore humidity is eliminated from the surface and from the material which occurs in a particularly effective way.

Advantageously, therefore, the means 16, 16' designed to generate a field of electrostatic attraction of the material 11 on the supporting surface 12 are arranged between the first and second slabs 131, 132, superposed on one another, of the table.

In this way a sturdy table is obtained and at the same time a greater vicinity of the electrostatic field generating means with respect to the upper rest surface of the product and therefore an attraction of the material is obtained which is particularly effective.

The means 16, 16' designed to generate a field of electrostatic attraction, of the material 11 on the supporting surface 12 are advantageously internally provided at the table 13 defining the supporting surface 12 of the product, in particular between the upper surface 12 and the lower surface of the supporting table 13.

In practice, a table is obtained in which, advantageously, the electrically-conductive layer 16 is perpendicularly interposed, in particular the first and second electrically-conductive layers 16, 16" are perpendicularly interposed between the first and second slabs 131, 132 defining the supporting table 13.

The invention described has evident industrial applications. It would be obvious to one skilled in the art that several changes and modifications can be made to the invention without departing from the scope of the invention, described in depth above. It is also easy to imagine further preferred embodiments of the invention comprising one or more of the features described herein. Moreover, it will be understood that all the details of the invention may be substituted for technically equivalent elements.

## Claims

1. An apparatus (10) for treatment of, in particular for cutting, a material (11), the material preferably being in a form of a respective body having a prevalent two-dimensional extension, preferably yielding or foldable, especially conformed in a tape or band-like form, i.e. in a form of a respective piece, and preferably in the form of fabric, leather or like raw materials, and being especially for making corresponding pieces for clothing, that is, for garments, apparel, for the furnishing industry or for other uses; the apparatus comprising a respective supporting surface (12), in particular for resting and possibly sliding, the material (11), especially defined by a corresponding table (13), preferably flat and having cutting means (15) of the material, in particular situated above the supporting surface (12) and preferably in the form of corresponding circular blade means, means (16, 16') able to generate a field of electrostatic attraction of the material (11) on the supporting surface (12), **characterised in that** it comprises means (16) designed to eliminate humidity at the supporting surface (12) of the material (11).

2. The apparatus according to claim 1, **characterised in that** the means designed to eliminate humidity are in a form of corresponding heating means (16) of the engagement surface (12) of the product;
the heating means (16) of the engagement surface (12) of the product heating the table (13) defining the supporting surface (12) of the product.

3. The apparatus of any one of the preceding claims, **characterised in that** the means (16) designed to eliminate humidity at the supporting surface (12) of the material (11) or the heating means are internally provided at the table (13) defining the supporting surface (12) of the product, in particular between the upper surface (12) and the lower surface of the supporting table (13).

4. The apparatus of any one of the preceding claims, **characterised in that** the means (16, 16') designed to generate a field of electrostatic attraction, of the material (11) on the supporting surface (12), are internally provided at the table (13) defining the supporting surface (12) of the product, in particular between the upper surface (12) and the lower surface of the supporting table (13).

5. The apparatus of any one of the preceding claims, **characterised in that** the means designed to eliminate humidity at the supporting surface (12) of the material (11) or the heating means, comprise an electrically-conductive layer (16), in particular extending in size in the same way as, or substantially in the same way as, the respective supporting surface of the product.

6. The apparatus according to claim 5, **characterised in that** the respective electrically-conductive layer able to eliminate the humidity (16) is positioned below the supporting surface (12) of the product, internally of the table (13) defining the supporting surface (12) of the product.

7. The apparatus of any one of claims 5 or 6, **characterised in that** the electrically-conductive layer able to eliminate the humidity (16) defines the means designed to generate a field of electrostatic attraction of the material (11) on the supporting surface (12).

8. The apparatus of any one of the preceding claims from 5 to 7, **characterised in that** the electrically-conductive layer is defined by a metallic layer (16) deposited on the material of the table (13), in particular being a respective metal oxide.

9. The apparatus of any one of the preceding claims, **characterised in that** it comprises a second electrically-conductive layer (16'), in particular defining means designed to generate the electrostatic retaining field of the material on the supporting surface.

10. The apparatus of any one of the preceding claims, **characterised in that** the supporting table (13) is made of a dielectric material, and preferably glass.

11. The apparatus according to any one of the preceding claims, **characterised in that** the supporting table (13) is defined by first and second slabs (131, 132), superposed on one another, preferably made of glass, or of dielectric material, in particular having a relative thickness of around 6 mm; the heating means (16) are arranged between the first and second slabs (131, 132), superposed on one another, of the table and the means (16, 16') designed to generate a field of electrostatic attraction of the material (11) on the supporting surface (12) are arranged between the first and second slabs (131, 132), superposed on one another, of the table.

12. The apparatus according to claim 11, **characterised in that** the electrically-conductive layer (16) is interposed, in particular the first and second electrically-conductive layers (16, 16") are interposed between the first and second slabs (131, 132) defining the supporting table (13).

13. The apparatus of claim 11 or 12, **characterised in that** the electrically-conductive layer (16) is deposited on the internal face of the respective first and/or second slabs (131, 132) defining the supporting table (13).

14. The apparatus of any one of the preceding claims from 11 to 13, **characterised in that** a corresponding layer of insulating material and/or plastic material (163, 163), in particular having a thickness of around 1.5 mm, is interposed between the electrically-conductive layer, in particular the metallic slab (16') and the corresponding surface of the first and second slabs (131, 132) defining the supporting table (13).

15. The apparatus of any one of the preceding claims from 11 to 14, **characterised in that** a corresponding layer (164) of PVB or polyvinyl butyral, preferably having a thickness of around 0.5 mm, is interposed between the electrically-conductive layer, in particular a metallic deposit (16) deposited on the surface of the corresponding slab (131 or 132) of the supporting table (13) and the opposite slab (132 or 131) of the supporting table (13).

16. The apparatus of any one of the preceding claims from 5 to 15, **characterised in that** the conductive metallic layer (16) comprises corresponding electric connecting means, in particular comprising a first and a second, and preferably a third (1601, 1602, 1603) supply bars, especially made of silver paste, having respective terminals (1604), in particular made of copper.

17. The apparatus according to claim 16, **characterised in that** a respective earth connecting bar (1601) is predisposed at a central zone of the respective slab (131) defining the supporting table (13).

18. The apparatus according to any one of the preceding claims 16 or 17, **characterised in that** a first and a second connecting bars (1602, 1603) to the electricity supply source are provided at lateral end zones of the respective slab (131) defining the supporting table (13).

19. The apparatus of any one of the preceding claims, **characterised in that** means (14) for emitting electrical charges are provided, in particular defining the means designed to induce electrical charges on the material (11), in particular arranged above the material, in particular above the supporting surface (12) of the material.

20. The apparatus according to any one of the preceding claims, **characterised in that** means (18) designed to neutralise the electrical charge on the material (11) are provided, in particular above the material, in particular above the supporting surface (12) of the material.

21. The apparatus according to any one of the preceding claims, **characterised in that** means (20) designed to convey the electrical charges are provided, in particular above the supporting surface (12) of the material.

22. A table (13), defining a supporting surface (12), in particular for supporting and possibly sliding the material (11), preferably utilisable in an apparatus (10) for treatment of, in particular for cutting, a material (11), the material preferably being in a form of a respective body having a prevalent two-dimensional extension, preferably yielding or foldable, especially conformed in a tape or band-like form, i.e. in a form of a respective piece, and preferably in the form of fabric, leather or like raw materials, and being especially for making corresponding pieces for clothing, that is, for garments, apparel, for the furnishing industry or for other uses; the table (13) being **characterised in that**
it comprises means (16, 16') able to generate a field of electrostatic attraction of the material (11) on the supporting surface (12) and means (16) designed to eliminate humidity at the supporting surface (12) of the material (11);
the means designed to eliminate humidity at the supporting surface (12) of the material (11), preferably heating means, are internally provided at the table (13) internally defining the supporting surface (12) of the product, in particular between the upper surface (12) and the lower surface of the supporting table (13);the means (16, 16') designed to generate a field of electrostatic attraction, of the material (11) on the supporting surface (12) are internally provided at the table (13) defining the supporting surface (12) of the product, in particular between the upper surface (12) and the lower surface of the supporting table (13).

## Patentansprüche

1. Vorrichtung (10) zur Bearbeitung, insbesondere zum Schneiden, eines Werkstoffs (11), wobei der Werkstoff vorzugsweise in einer Form eines jeweiligen Körpers mit einer vorherrschenden zweidimensionalen Ausdehnung, vorzugsweise nachgiebig oder faltbar, vorliegt insbesondere in einer streifen- oder bandförmigen Form ausgestaltet, d.h. in einer Form eines jeweiligen Stücks, und vorzugsweise in Form von Stoff, Leder oder ähnlichen Rohstoffen, und insbesondere zur Herstellung entsprechender Stücke für Bekleidung, d.h. für Kleider, Kleidung, für die Einrichtungsindustrie oder für andere Verwendungen ausgebildet ist; wobei die Vorrichtung eine jeweilige Stützfläche (12) umfasst, insbesondere zum Aufliegen und gegebenenfalls Gleiten, des Werkstoffs (11), insbesondere definiert durch einen entsprechenden Tisch (13), vorzugsweise flach und mit Mitteln (15) zum Schneiden des Werkstoffs, die insbesondere über der Stützfläche (12) angeordnet sind und vorzugsweise in Form von entsprechenden kreisförmigen Klingenmitteln, sowie Mittel (16, 16'), die in der Lage sind, ein elektrostatisches Anziehungsfeld des Werkstoffs (11) auf der Stützfläche (12) zu erzeugen, **dadurch gekennzeichnet, dass** sie Mittel (16) umfasst, die ausgelegt sind, um Feuchtigkeit an der Stützfläche (12) des Werkstoffs (11) zu beseitigen.

2. Vorrichtung nach Anspruch 1, **dadurch gekennzeichnet, dass** die Mittel, die zur Beseitigung der Feuchtigkeit ausgelegt sind, in einer Form von entsprechenden Heizmitteln (16) der Eingriffsfläche (12) des Produkts sind;
wobei die Heizmittel (16) der Eingriffsfläche (12) des Produkts den Tisch (13) erwärmen, der die Stützfläche (12) des Produkts definiert.

3. Vorrichtung nach einem der vorhergehenden Ansprüche, **dadurch gekennzeichnet, dass** die Mittel (16), die zur Beseitigung der Feuchtigkeit an der Stützfläche (12) des Werkstoffs (11) ausgelegt sind, oder die Heizmittel im Inneren am Tisch (13), der die Stützfläche (12) des Produkts definiert, insbesondere zwischen der oberen Fläche (12) und der unteren Fläche des Stütztisches (13) vorgesehen sind.

4. Vorrichtung nach einem der vorhergehenden Ansprüche, **dadurch gekennzeichnet, dass** die Mittel (16, 16'), die zur Erzeugung eines elektrostatischen Anziehungsfeldes des Werkstoffs (11) auf der Stützfläche (12) ausgelegt sind, im Inneren am Tisch (13), der die Stützfläche (12) des Produkts definiert, insbesondere zwischen der oberen Fläche (12) und der unteren Fläche des Stütztisches (13) vorgesehen sind.

5. Vorrichtung nach einem der vorgehenden Ansprüche, **dadurch gekennzeichnet, dass** die Mittel, die zur Beseitigung der Feuchtigkeit an der Stützfläche (12) des Werkstoffs (11) ausgelegt sind oder die Heizmittel eine elektrisch leitende Schicht (16) umfassen, deren Größe sich insbesondere in der gleichen Weise oder im Wesentlichen in der gleichen Weise wie die jeweilige Stützfläche des Produkts erstreckt.

6. Vorrichtung nach Anspruch 5, **dadurch gekennzeichnet, dass** die jeweilige elektrisch leitende Schicht, die in der Lage ist, die Feuchtigkeit (16) zu beseitigen, unter der Stützfläche (12) des Produktes im Inneren des Tisches (13), der die Stützfläche (12) des Produktes definiert, positioniert ist.

7. Vorrichtung nach einem der Ansprüche 5 oder 6, **dadurch gekennzeichnet, dass** die elektrisch leitende Schicht, die in der Lage ist, die Feuchtigkeit (16) zu beseitigen, die Mittel definiert, die ausgelegt sind, um ein elektrostatisches Anziehungsfeld des Werkstoffs (11) auf der Stützfläche (12) zu erzeugen.

8. Vorrichtung nach einem der vorgehenden Ansprüche 5 bis 7, **dadurch gekennzeichnet, dass** die elektrisch leitende Schicht durch eine auf dem Werkstoff des Tisches (13) abgeschiedene metallische Schicht (16) definiert ist, die insbesondere ein jeweiliges Metalloxid ist.

9. Vorrichtung nach einem der vorhergehenden Ansprüche, **dadurch gekennzeichnet, dass** sie eine zweite elektrisch leitende Schicht (16') umfasst, die insbesondere Mittel definiert, die ausgelegt sind, um das elektrostatische Haltefeld des Werkstoffs auf der Stützfläche zu erzeugen.

10. Vorrichtung nach einem der vorhergehenden Ansprüche, **dadurch gekennzeichnet, dass** der Stütztisch (13) aus einem dielektrischen Werkstoff, vorzugsweise aus Glas, besteht.

11. Vorrichtung nach einem der vorhergehenden Ansprüche, **dadurch gekennzeichnet, dass** der Stütztisch (13) durch eine erste und eine zweite Platte (131, 132) definiert ist, die übereinander angeordnet sind und vorzugsweise aus Glas oder aus dielektrischem Werkstoff bestehen, insbesondere aufweisend eine relative Dicke von etwa 6 mm; die Heizmittel (16) sind zwischen der ersten und der zweiten Platte (131, 132), die übereinander angeordnet sind, des Tisches angeordnet, und die Mittel (16, 16'), die ausgelegt sind, um ein elektrostatisches Anziehungsfeld des Werkstoffs (11) auf der Stützfläche (12) zu erzeugen, zwischen der ersten und der zweiten Platte (131, 132), die übereinander angeordnet sind, des Tisches angeordnet sind.

12. Vorrichtung nach Anspruch 11, **dadurch gekennzeichnet, dass** die elektrisch leitende Schicht (16) dazwischen angeordnet ist, insbesondere sind die erste und die zweite elektrisch leitende Schicht (16, 16") zwischen der ersten und der zweiten Platte (131, 132), die den Stütztisch (13) definieren, angeordnet.

13. Vorrichtung nach Anspruch 11 oder 12, **dadurch gekennzeichnet, dass** die elektrisch leitende Schicht (16) auf der Innenseite der jeweiligen ersten und/oder zweiten Platte (131, 132), die den Stütztisch (13) definiert, abgeschieden ist.

14. Vorrichtung nach einem der vorgehenden Ansprüche 11 bis 13, **dadurch gekennzeichnet, dass** eine entsprechende Schicht aus Isoliermaterial und/oder Kunststoff (163, 163), insbesondere aufweisend eine Dicke von etwa 1,5 mm, zwischen der elektrisch leitenden Schicht, insbesondere der metallischen Platte (16'), und der entsprechenden Fläche der ersten und zweiten Platte (131, 132), die den Stütztisch (13) definieren, angeordnet ist.

15. Vorrichtung nach einem der vorgehenden Ansprüche 11 bis 14, **dadurch gekennzeichnet, dass** eine entsprechende Schicht (164) aus PVB oder Polyvinylbutyral, vorzugsweise aufweisend eine Dicke von etwa 0,5 mm, zwischen der elektrisch leitenden Schicht, insbesondere einer metallischen Abscheidung (16), die auf der Fläche der entsprechenden Platte (131 oder 132) des Stütztisches (13) und der gegenüberliegenden Platte (132 oder 131) des Stütztisches (13) abgeschieden ist, angeordnet ist.

16. Vorrichtung nach einem der vorgehenden Ansprüche 5 bis 15, **dadurch gekennzeichnet, dass** die leitende metallische Schicht (16) entsprechende elektrische Verbindungsmittel umfasst, die insbesondere eine erste und eine zweite und vorzugsweise eine dritte (1601, 1602, 1603) Versorgungsschiene, insbesondere aus Silberpaste bestehend, aufweisend jeweilige Anschlüsse (1604), insbesondere aus Kupfer, umfassen.

17. Vorrichtung nach Anspruch 16, **dadurch gekennzeichnet, dass** eine jeweilige Erdungsverbindungsschiene (1601) in einer zentralen Zone der jeweiligen Platte (131), die den Stütztisch (13) definiert, angeordnet ist.

18. Vorrichtung nach einem der vorgehenden Ansprüche 16 oder 17, **dadurch gekennzeichnet, dass** eine erste und eine zweite Verbindungsschiene (1602, 1603) an die Stromversorgungsquelle an seitlichen Endzonen der jeweiligen Platte (131), die den Stütztisch (13) definieren, vorgesehen sind.

19. Vorrichtung nach einem der vorgehenden Ansprüche, **dadurch gekennzeichnet, dass** Mittel (14) zum Emittieren von elektrischen Ladungen vorgesehen sind, die insbesondere die Mittel definieren, die zur Induktion von elektrischen Ladungen auf dem Werkstoff (11) ausgelegt sind, die insbesondere über dem Werkstoff, insbesondere über der Stützfläche (12) des Werkstoffs angeordnet sind.

20. Vorrichtung nach einem der vorgehenden Ansprüche, **dadurch gekennzeichnet, dass** Mittel (18), die zum Neutralisieren der elektrischen Ladung auf dem Werkstoff (11) ausgelegt sind, insbesondere über dem Werkstoff, insbesondere über der Stützfläche (12) des Werkstoffs vorgesehen sind.

21. Vorrichtung nach einem der vorgehenden Ansprüche, **dadurch gekennzeichnet, dass** Mittel (20), die zum Fördern der elektrischen Ladungen ausgelegt sind, insbesondere über der Stützfläche (12) des Werkstoffs vorgesehen sind.

22. Tisch (13), der eine Stützfläche (12) definiert, insbesondere zum Stützen und möglicherweise zum Gleiten des Werkstoffs (11), vorzugsweise verwendbar in einer Vorrichtung (10) zur Bearbeitung, insbesondere zum Schneiden, eines Werkstoffs (11), wobei der Werkstoff vorzugsweise in einer Form eines jeweiligen Körpers mit einer vorherrschenden zweidimensionalen Ausdehnung, vorzugsweise nachgiebig oder faltbar, vorliegt insbesondere in einer streifen- oder bandförmigen Form ausgestaltet, d.h. in einer Form eines jeweiligen Stücks, und vorzugsweise in Form von Stoff, Leder oder ähnlichen Rohstoffen, und insbesondere zur Herstellung entsprechender Stücke für Bekleidung, d.h. für Kleider, Kleidung, für die Einrichtungsindustrie oder für andere Verwendungen ausgebildet ist, wobei der Tisch (13) **dadurch gekennzeichnet ist, dass**
er Mittel (16, 16') umfasst, die in der Lage sind, ein elektrostatisches Anziehungsfeld des Werkstoffs (11) auf der Stützfläche (12) zu erzeugen, und Mittel (16), die zur Beseitigung der Feuchtigkeit an der Stützfläche (12) des Werkstoffs (11) ausgelegt sind;
die Mittel, die zur Beseitigung der Feuchtigkeit an der Stützfläche (12) des Werkstoffs (11) ausgelegt sind, vorzugsweise Heizmittel, sind im Inneren am Tisch (13), der die Stützfläche (12) des Produkts im Inneren definiert, insbesondere zwischen der oberen Fläche (12) und der unteren Fläche des Stütztisches (13) vorgesehen; die Mittel (16, 16'), die zur Erzeugung eines elektrostatischen Anziehungsfeldes des Werkstoffs (11) auf der Stützfläche (12) ausgelegt sind, im Innern am Tisch (13), der die Stützfläche (12) des Produkts definiert, insbesondere zwischen der oberen Fläche (12) und der unteren Fläche des Stütztisches (13) vorgesehen sind.

## Revendications

1. Dispositif (10) pour le traitement, en particulier pour la découpe, d'un matériau (11), le matériau ayant de préférence la forme d'un corps respectif, ayant une extension bidimensionnelle principale, de préférence souple ou pliable, spécialement conformé sous forme de bande ou de ruban, c'est-à-dire sous la forme d'une pièce respective, et de préférence sous forme de tissu, de cuir ou de matières premières similaires, et étant spécialement destiné à la fabrication de pièces correspondantes pour l'habillement, c'est-à-dire pour des vêtements, des articles d'habillement, pour l'industrie de l'ameublement ou pour d'autres utilisations ; le dispositif comprenant une surface de support (12) respective, en particulier pour mettre en appui et éventuellement faire glisser le matériau (11), spécialement définie par une table (13) correspondante, de préférence plate et comportant des moyens de coupe (15) du matériau, en particulier situés au-dessus de la surface de support (12) et de préférence sous la forme de moyens de lame circulaire correspondants, des moyens (16, 16') pouvant générer un champ d'attraction électrostatique du matériau (11) sur la surface de support (12), **caractérisé en ce qu'**il comprend des moyens (16) conçus pour éliminer l'humidité en correspondance de la surface de support (12) du matériau (11).

2. Dispositif selon la revendication 1, **caractérisé en ce que** les moyens conçus pour éliminer l'humidité se présentent sous la forme de moyens de chauffage (16) correspondants de la surface d'engagement (12) du produit ;
les moyens de chauffage (16) de la surface d'engagement (12) du produit chauffant la table (13) définissant la surface de support (12) du produit.

3. Dispositif selon l'une quelconque des revendications précédentes, **caractérisé en ce que** les moyens (16) conçus pour éliminer l'humidité en correspondance de la surface de support (12) du matériau (11) ou les moyens de chauffage sont prévus à l'intérieur en correspondance de la table (13) définissant la surface de support (12) du produit, en particulier entre la surface supérieure (12) et la surface inférieure de la table de support (13).

4. Dispositif selon l'une quelconque des revendications précédentes, **caractérisé en ce que** les moyens (16, 16'), conçus pour générer un champ d'attraction électrostatique du matériau (11) sur la surface de support (12), sont prévus à l'intérieur en correspondance de la table (13) définissant la surface de support (12) du produit, en particulier entre la surface supérieure (12) et la surface inférieure de la table de support (13).

5. Dispositif selon l'une quelconque des revendications précédentes, **caractérisé en ce que** les moyens conçus pour éliminer l'humidité en correspondance de la surface de support (12) du matériau (11) ou les moyens de chauffage comprennent une couche (16) électriquement conductrice dont la dimension s'étend, en particulier, de la même manière, ou substantiellement de la même manière, que la surface de support respective du produit.

6. Dispositif selon la revendication 5, **caractérisé en ce que** la couche électriquement conductrice respective en mesure d'éliminer l'humidité (16) est placée sous la surface de support (12) du produit, à l'intérieur de la table (13) définissant la surface de support (12) du produit.

7. Dispositif selon l'une quelconque des revendications 5 ou 6, **caractérisé en ce que** la couche électriquement conductrice en mesure d'éliminer l'humidité (16) définit les moyens conçus pour générer un champ d'attraction électrostatique du matériau (11) sur la surface de support (12).

8. Dispositif selon l'une quelconque des revendications précédentes de 5 à 7, **caractérisé en ce que** la couche électriquement conductrice est définie par une couche métallique (16), déposée sur le matériau de la table (13), étant, en particulier, un oxyde métallique respectif.

9. Dispositif selon l'une quelconque des revendications précédentes, **caractérisé en ce qu'**il comprend une seconde couche (16') électriquement conductrice, définissant en particulier des moyens conçus pour générer le champ de retenue électrostatique du matériau sur la surface de support.

10. Dispositif selon l'une quelconque des revendications précédentes, **caractérisé en ce que** la table de support (13) est constituée d'un matériau diélectrique, et de préférence du verre.

11. Dispositif selon l'une quelconque des revendications précédentes, **caractérisé en ce que** la table de support (13) est définie par des première et seconde plaques (131, 132), superposées l'une sur l'autre, de préférence en verre ou en matériau diélectrique, en particulier ayant une épaisseur relative d'environ 6 mm ; les moyens de chauffage (16) sont disposés entre les première et seconde plaques (131, 132), superposées l'une sur l'autre, de la table et les moyens (16, 16') conçus pour générer un champ d'attraction électrostatique du matériau (11) sur la surface de support (12) sont disposés entre les première et seconde plaques (131, 132), superposées l'une sur l'autre, de la table.

12. Dispositif selon la revendication 11, **caractérisé en ce que** la couche (16) électriquement conductrice est interposée, en particulier, les première et seconde couches (16, 16") électriquement conductrices sont interposées entre les première et seconde plaques (131, 132) définissant la table de support (13).

13. Dispositif selon la revendication 11 ou 12, **caractérisé en ce que** la couche (16) électriquement conductrice est déposée sur la face interne des première et/ou seconde plaques (131, 132) respectives définissant la table de support (13).

14. Dispositif selon l'une quelconque des revendications précédentes de 11 à 13, **caractérisé en ce qu'**une couche correspondante de matériau isolant et/ou de matière plastique (163, 163) ayant, en particulier, une épaisseur d'environ 1,5 mm, est interposée entre la couche électriquement conductrice, en particulier la plaque métallique (16') et la surface correspondante des première et seconde plaques (131, 132) définissant la table de support (13).

15. Dispositif selon l'une quelconque des revendications précédentes de 11 à 14, **caractérisé en ce qu'**une couche (164) correspondante de PVB ou butyral polyvinylique, ayant de préférence une épaisseur d'environ 0,5 mm, est interposée entre la couche électriquement conductrice, en particulier un dépôt métallique (16) déposé sur la surface de la plaque correspondante (131 ou 132) de la table de support (13) et la plaque opposée (132 ou 131) de la table de support (13).

16. Dispositif selon l'une quelconque des revendications précédentes de 5 à 15, **caractérisé en ce que** la couche métallique conductrice (16) comprend des moyens de connexion électrique correspondants, comprenant en particulier une première et une deuxième, et de préférence une troisième (1601, 1602, 1603) barres d'alimentation, spécialement en pâte d'argent, comportant des bornes (1604) respectives, en particulier en cuivre.

17. Dispositif selon la revendication 16, **caractérisé en ce qu'**une barre (1601) respective de connexion à la terre est prédisposée en correspondance d'une zone centrale de la plaque (131) respective définissant la table de support (13).

18. Dispositif selon l'une quelconque des revendications précédentes 16 ou 17, **caractérisé en ce qu'**une première et une seconde barre de connexion (1602, 1603) à la source d'alimentation électrique sont prévues en correspondance des zones d'extrémité latérales de la plaque (131) respective définissant la table de support (13).

19. Dispositif selon l'une quelconque des revendications précédentes, **caractérisé en ce que** des moyens (14) servant à émettre des charges électriques sont prévus, définissant, en particulier, les moyens conçus pour induire des charges électriques sur le matériau (11), en particulier disposés au-dessus du matériau, notamment au-dessus de la surface de support (12) du matériau.

20. Dispositif selon l'une quelconques des revendications précédentes, **caractérisé en ce que** des moyens (18) conçus pour neutraliser la charge électrique sur le matériau (11) sont prévus, en particulier au-dessus du matériau, notamment au-dessus de la surface de support (12) du matériau.

21. Dispositif selon l'une quelconque des revendications précédentes, **caractérisé en ce que** des moyens (20) conçus pour acheminer les charges électriques sont prévus, en particulier au-dessus de la surface de support (12) du matériau.

22. Table (13), définissant une surface de support (12), en particulier pour supporter et éventuellement faire glisser le matériau (11), de préférence utilisable dans un dispositif (10) pour le traitement, en particulier pour la découpe, d'un matériau (11), le matériau se présentant, de préférence, sous la forme d'un corps respectif comportant une extension bidimensionnelle principale, de préférence souple ou pliable, spécialement conformé sous forme de bande ou de ruban, c'est-à-dire sous la forme d'une pièce respective, et de préférence sous forme de tissu, de cuir ou de matières premières similaires, et étant spécialement destiné à la fabrication de pièces correspondantes pour l'habillement, c'est-à-dire pour des vêtements, des articles d'habillement, pour l'industrie de l'ameublement ou pour d'autres utilisations ; la table (13) étant **caractérisée en ce que**
elle comprend des moyens (16, 16') pouvant générer un champ d'attraction électrostatique du matériau (11) sur la surface de support (12) et des moyens (16) conçus pour éliminer l'humidité en correspondance de la surface de support (12) du matériau (11) ;
les moyens conçus pour éliminer l'humidité en correspondance de la surface de support (12) du matériau (11), de préférence des moyens de chauffage, sont prévus à l'intérieur de la table (13) définissant intérieurement la surface de support (12) du produit, en particulier entre la surface supérieure (12) et la surface inférieure de la table de support (13) ; les moyens (16, 16') conçus pour générer un champ d'attraction électrostatique du matériau (11) sur la surface de support (12) sont prévus à l'intérieur en correspondance de la table (13) définissant la surface de support (12) du produit, en particulier entre la surface supérieure (12) et la surface inférieure de la table de support (13).
